Europäisches Patentamt

European Patent Office

Office européen des brevets

(11) Veröffentlichungsnummer: **0 428 910 A2**

# (12) EUROPÄISCHE PATENTANMELDUNG

(21) Anmeldenummer: 90120754.8

(51) Int. Cl.5: **A01K 5/02**

(22) Anmeldetag: **30.10.90**

(30) Priorität: **11.11.89 DE 3937602**

(43) Veröffentlichungstag der Anmeldung:
**29.05.91 Patentblatt 91/22**

(84) Benannte Vertragsstaaten:
**AT BE DE DK FR GB IT NL**

(71) Anmelder: **ARATOWERK WALTER VON TASCHITZKI GmbH & CO. KG**
**Alte Forststrasse 55**
**W-5000 Köln-Rath (Heumar)(DE)**

(72) Erfinder: **Taschitzki, Martin v., Dipl.-Ing.agr.**
**Alte Forststr. 55**
**W - 5000 Köln 91(DE)**

(74) Vertreter: **Lippert, Hans-Joachim, Dipl.-Ing. et al**
**Patentanwälte, Dahlke, Lippert, Stachow, Tackenberg & Schönwald, P.O. Box 30 02 08,**
**Frankenforster Strasse 135-137**
**W-5060 Bergisch Gladbach 1(DE)**

(54) **Selbstfütterungsvorrichtung für die Versorgung von Tieren mit Nahrung.**

(57) Die Selbstfütterungsvorrichtung weist einen Futtertrog, einen Futtervorratsbehälter und eine Tränkvorrichtung auf. Die Vorderwand 3 obehalb des Futtertroges 7 besitzt eine auf Größe und Gestalt des Kopfes des zu fütternden Tieres abgestimmte Durchschlupföffnung. Der Boden 11 des Vorratsbehälters 10 verläuft schräg nach hinten abwärts und weist am unteren Ende eine Schürze 12, 12a auf. Oberhalb des Behälterbodens 11 ist ein Rüttelrahmen 16 angeordnet. Die Rüttelorgane 18 stehen mit dem Rüttelrahmen 16 in Bewegungsverbindung und erstrecken sich in den Raum des Futtertroges 7.

FIG.1

## SELBSTFÜTTERUNGSVORRICHTUNG FÜR DIE VERSORGUNG VON TIEREN MIT NAHRUNG

Die Erfindung bezieht sich auf eine Fütterungsvorrichtung, die den Tieren sowohl schüttfähiges Futter als auch eine Flüssigkeit, insbesondere Wasser, zur selbständigen Entnahme spendet, wobei ein Futtervorratsbehälter, ein kleiner Trog und eine Tränkvorrichtung insgesamt eine Einheit bilden.

Die bisher bekannten Selbstfütterungsvorrichtungen sind so gebaut, daß über einem Trog ein Futtervorratsbehälter angeordnet ist, aus dem durch einen vom Tier zu betäti genden Klappenmechanismus eine Futterportion entnommen werden muß, die in den Trog fällt, wo sie anschließend verzehrt werden kann. Dabei ist nachteilig, daß diese Tätigkeit wie auch der anschließende Freßvorgang von den übrigen Tieren der in einer Bucht gehaltenen Gruppe beobachtet werden kann, so das Futterneid erregt wird und immer wieder Rangordnungskämpfe am Futtertrog ausgetragen werden, wobei Futter vergeudet wird.

Ein weiteres Problem ist, daß die Futtermischungen, die den Tieren mit solchen Fütterungsvorrichtungen angeboten werden sollen, hinsichtlich ihres Schütt- und Fließverhaltens sehr unterschiedlich sein können. Während z.B. pelletiertes Futter ziemlich schnell aus dem Vorratsbehälter rieselt, kann ein mehr oder weniger grob geschrotetes Futter sehr unterschiedlich viel Feuchtigkeit enthalten und sogar dazu neigen, sich im unteren Bereich des trichterförmigen Vorratsbehälters festzusetzen, so daß nichts mehr in den Trog nachrieselt.

Aufgabe der Erfindung ist, eine Selbstfütterungsvorrichtung so zu verbessern, daß einerseits Futterverluste weitgehend vermieden werden und anderersetis die Futterzubringungsorgane dem Fließverhalten der jeweils angebotenen Futtermischung angepaßt werden können, damit eine gleichmäßige, dem Futterverbrauch im Trog entsprechende Versorgung der Tiere erreicht wird.

Die erfindungsgemäße Fütterungsvorrichtung zeichnet sich dadurch aus, daß die Vorderwand oberhalb des Futtertroges eine auf Größe und Gestalt des Kopfes der zu fütternden Tiere abgestimmte Durchschlupföffnung aufweist, daß der Boden des Futtervorratsbehälters schräg nach hinten abwärts verläuft und am unteren Ende eine Schürze aufweist, daß an der Rückwand des Vorratsbehälters Rüttelorgane nach beiden Seiten hin und her verschwenkbar angeordnet sind und unterhalb der Schürze in senkrecht stehenden, flächenartig geformten Fußteilen enden, und daß ein Rüttelrahmen vorgesehen ist, der mit den Rüttelorganen in Bewegungsverbindung steht.

Eine so ausgebildete Fütterungsvorrichtung hat den Vorteil, daß die bis auf eine Durchschlupföffnung geschlossene Vorderfront der Vorrichtung den Freßvorgang den futterneidischen Blicken der übrigen Tiere entzieht, so daß jegliche Aggression bereits in der Entstehungsphase vermieden wird und kein Futter durch Rangordnungskämpfe am Futtertrog verloren gehen kann. Die Tiere können der Reihe nach in aller Ruhe fressen. Mit Hilfe der weiteren Gestaltung der Fütterungsvorrichtung ist es ermöglicht, diese schnell auf die Fließeigenschaften der gerade zur Verfütterung gelangenden Futtermischung einzustellen, so daß die Tiere immer die richtige Menge erhalten, wenn sie bei der Futteraufnahme die Rüttelorgane betätigen, um für das Nachfüllen des Troges zu sorgen.

Die in verschiedenen Positionen zu fixierende Schürze ermöglicht es, die Breite des Auslaßschlitzes am unteren Ende des Vorratsbehälters zu verandern, je nachdem, ob pelletiertes Futter oder geschrotetes Futter angeboten wird, welches wiederum verschiedene Körnungen und Feuchtigkeitsgrade aufweisen kann. Die senkrecht stehenden, flächenartig geformten Fußteile der Rüttelorgane haben den Vorteil, daß sie eine besonders gute Angriffsfläche bieten, falls es zu ihrer Betätigung größerer Kraftanstrengung bedarf, wenn es z.B. die Beschaffenheit der Futtermischung erfordert.

Das untere Ende der Schürze kann als selbständiges Teil ausgebildet sein und in verschiedenen Positionen fixiert werden, so daß die Durchgangsöffnung am Trog eingestellt werden kann.

Der Rüttelrahmen läßt sich über den Behälterboden lose einlegen und auch wieder herausnehmen, wenn er nicht gebraucht wird. Er ist zweckmäßig so gebaut, daß er einen trapezartigen Umriß hat und an seiner Schmalseite eine Ausbuchtung aufweist, die auf einem Quersteg zu liegen kommt, der die Rüttelstangen miteinander verbindet. Der Rüttelrahmen wird beim Hin- und Herbewegen der Rüttelstangen von diesen mitbewegt. Der Rüttelrahmen kann durch Quer- und Längsstreben verstärkt sein, damit er sich nicht verformen kann, falls sich in den Ecken und Kanten des Vorratsbehälters ein Teil des Futters verfestigt hat. Die Hin- und Herbewegung des Rüttelrahmens wird auf die darüberliegende Futterschicht übertragen, was ein Lockerwerden der Futtersäule veranlaßt, so daß das Futter in den Futtertrog abfallen kann.

Gemäß weiterer Merkmale der Erfindung können die Rüttelorgane Rüttelstangen sein, die an der Rückwand des Vorratsbehälters drehbar angebracht sind.

Die Rüttelstangen sind vorteilhaft Flachstäbe und können in sich eine gewisse Eigenfederung besitzen.

Die Erfindung wird anhand des in den Figuren dargestellten Ausführungsbeispieles nachstehend erläutert:

Figur 1 zeigt ein Ausführungsbeispiel der Fütterungsvorrichtung gemäß der Erfindung im Aufriß und im Längsschnitt schematisch,

Figur 2 stellt einen Schnitt nach der Linie II-II der Figur 1 ohne Rüttelrahmen dar,

Figur 3 ist ein Querschnitt nach der Linie III-III der Figur 1.

Die Fütterungsvorrichtung 1 zur Versorgung von Tieren mit Nahrung besteht aus einem Gehäuse 2 mit der Vorderwand 3, den Seitenwänden 4 und 5 und der Rückwand 6. Die Vorderwand 3 und die Rückwand 6 sind im unteren Teil schräg verlaufend angeordnet und umschließen einen Futtertrog 7. In der Vorderwand 3 ist eine Durchschlupföffnung 8 für den Kopf des zu fütternden Tieres angeordnet, die auf Größe und Gestalt des Kopfes des Tieres abgestimmt ist. Der Vorratsbehälter 10 der Fütterungsvorrichtung weist einen Boden 11 auf, der schräg nach hinten abwärts gerichtet ist und am unteren Ende mit einer Schürze 12 ausgerüstet ist. Die Schürze kann ganz oder zum Teil als selbständiges Teil ausgebildet sein. Zweckmäßig ist die Anordnung eines in der Höhe verschiebbaren Schürzenteils 12a, das mittels Riegel oder Schrauben fixiert werden kann. Eine Wasserzufuhr, z.B. als Tränkezapfen, kann an geeigneter Stelle oberhalb des Futtertroges angeordnet sein.

Die Fütterungsvorrichtung 1 ist mit einer Rüttelvorrichtung 14 ausgestattet. Diese setzt sich aus einem Rüttelmechanismus 15 und einem Rüttelrahmen 16 zusammen.

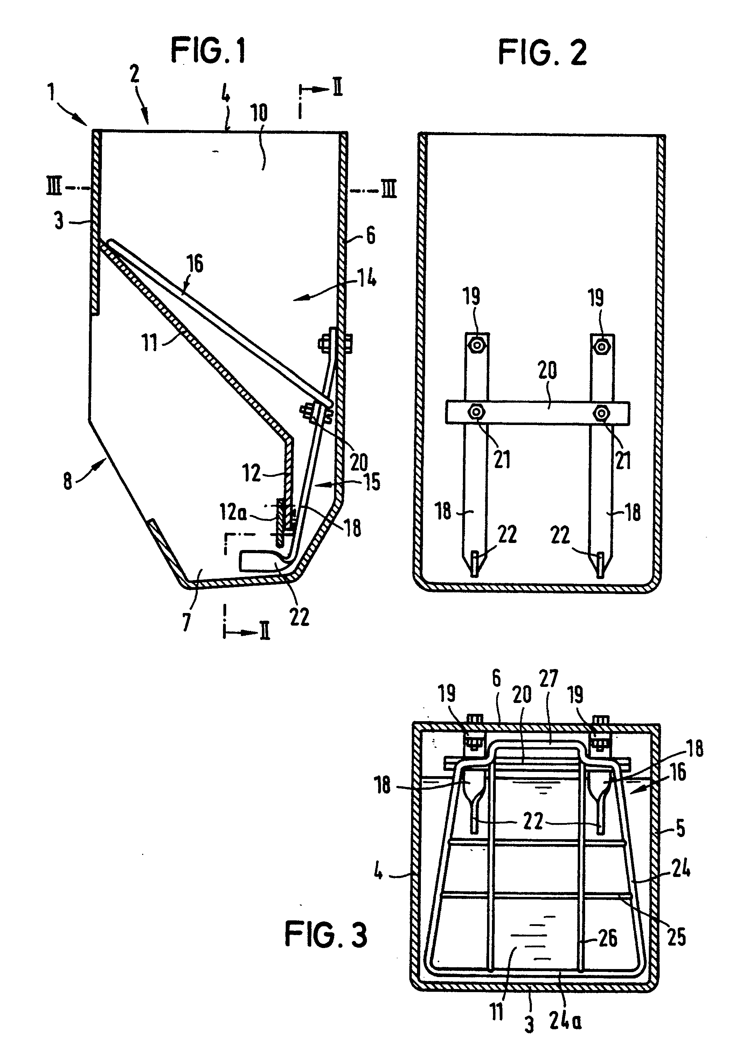

Der Rüttelmechanismus 15 weist Rüttelorgane, z.B. Rüttelstangen 18 auf, die am oberen Ende bei 19 an der Rückwand 6 drehbar gelagert sind. Die Rüttelstangen 18 sind durch einen Quersteg 20 verbunden, der bei 21 mit den Rüttelstangen gelenkig in Verbindung steht. Es ergibt sich dadurch ein hin- und herschwenkbares Parallelogramm. Am unteren Ende sind die Rüttelstangen 18 mit hochgestellten flächenartigen Teilen 22 ausgestattet. Diese Fußteile 22 ragen in den Trograum 7 unterhalb der Schürze 12,12a wie dies aus der Figur 1 zu erkennen ist.

Der Rüttelrahmen 16 besteht aus einem äußeren Rahmenteil 24, der durch Querstreben 25 und Längsstreben versteift werden kann. Der Rüttelrahmen ist mit einem Mitnehmer 27 versehen, der als Auskröpfung gestaltet sein kann.

Der Rüttelrahmen 16 liegt an dem an den Rüttelstangen 18 angelenkten Quersteg 20 lose auf. Mit dem anderen Ende, d.h. mit dem Rahmenteil 24, liegt der Rüttelrahmen 16 auf dem Boden 11 des Vorratsbehälters 10 ebenfalls lose auf.

Wenn bei fehlendem Nachschub das Futter aus dem Vorratsraum 10 nicht in den Trog 7 gelangt, können die Rüttelstangen 18 durch das das Futter suchende Tier hin- und herbewegt werden, wodurch diese Hin- und Herbewegung mittels des Mitnehmers 27 auf den Rüttelrahmen 16 übertragen wird. Der letztere wird ebenfalls über dem Boden 11 des Vorratsbehälters 10 hin- und herbewegt. Diese Hin- und Herbewegung wird auf die darüberliegende Futterschicht weitergegeben. Es tritt eine Lockerung innerhalb der Futtersäule ein, so daß das Futter nunmehr nachrutschen kann. Der Futtertrog 7 wird durch die hin- und hergehende Bewegung der Rüttelstangen 18, 22 mittels der entsprechenden Kopfbewegung des Tieres wieder gefüllt. Bei Futter, das von alleine zu dem Futtertrog 7 rieselt, ist der Rüttelrahmen 16 entbehrlich. Da er nur lose auf den Abstützungen aufliegt, kann er bei Nichtbedarf jederzeit herausgenommen werden. Das lose Aufliegen des Rüttelrahmens auf den Abstützteilen verhindert jegliche Verklemmung und Zwängung, so daß der Rüttelrahmen die Hin- und Herbewegung der Rüttelstangen in steter Betriebsbereitschaft mitmachen wird.

## Ansprüche

1. Selbstfütterungsvorrichtung zur Versorgung von Tieren, die sowohl schüttfähiges Futter als auch eine Flüssigkeit, insbesondere Wasser, spendet und bei der ein Futtertrog, ein Futtervorratsbehälter und eine Tränkvorrichtung vorgesehen sind, dadurch gekennzeichnet, daß die Vorderwand (3) oberhalb des Futtertroges (7) eine auf Größe und Gestalt des Kopfes der zu fütternden Tiere abgestimmte Durchschlupföffnung (8) aufweist, daß der Boden (11) des Futtervorratsbehälters (10) schräg nach hinten abwärts verläuft und am unteren Ende eine Schürze (12,12a) aufweist, daß oberhalb des Behälterbodens (11) ein Rüttelrahmen (16) angeordnet ist und daß Rüttelorgane (18) vorgesehen sind, die mit dem Rüttelrahmen (16) in Bewegungsverbindung stehen und sich in den Raum des Futtertroges (7) erstrecken.

2. Selbstfütterungsvorrichtung nach Anspruch 1, dadurch gekennzeichnet, daß die Rüttelorgane (18) Rüttelstangen sind, die an der Rückwand (6) des Vorratsbehälters drehbar angelenkt sind, und daß der Rüttelrahmen (16) auf einem an den Rüttelstangen (18) angelenkten Quersteg (20) aufliegt und mit einem Mitnehmer, z.B. einer Ausbuchtung (27), versehen ist.

3. Selbstfütterungsvorrichtung nach Anspruch 1 oder 2, dadurch gekennzeichnet, daß die Rüttelstangen (18) am freien Ende hochgestellte flächenartige Fußteile (22) aufweisen, und daß die Fußteile (22) in den Trograum (7) unterhalb der Schürze (12) ragen.

4. Selbstfütterungsvorrichtung nach einem der Ansprüche 1 bis 3, dadurch gekennzeichnet, daß der Rüttelrahmen (16) aus einem äußeren Rahmenteil (24) mit Quer- und Längsstreben (25,26) gebildet ist und auf dem Boden (11) des Vorratsbehälters (10) und an den Rüttelstangen (18,20) lose aufliegt.

5. Selbstfütterungsvorrichtung nach einem der Ansprüche 1 bis 4, dadurch gekennzeichnet, daß die Rüttelstangen (18) aus federnden Flachstäben gebildet sind.

6. Selbstfütterungsvorrichtung nach einem der Ansprüche 1 bis 5, dadurch gekennzeichnet, daß die Schürze (12) ganz oder zum Teil als selbständiges Teil ausgebildet ist.

7. Selbstfütterungsvorrichtung nach einem der Ansprüche 1 bis 6, dadurch gekennzeichnet, daß die Schürze (12) mit einem Schürzenteil (12a) versehen ist, das in der Höhe verschiebbar und in einer vorbestimmten Position, z.B. mittels Riegel oder Schrauben, fixierbar ist.

# FIG.1

# FIG. 2

# FIG. 3